# EUROPEAN PATENT SPECIFICATION

(11) **EP 2 554 430 B1**
(45) Date of publication and mention of the grant of the patent: **29.10.2014**
(21) Application number: 11176092.2
(22) Date of filing: 01.08.2011
(51) Int. Cl.: B60N 2/36, B60N 2/46

(54) **Seat back tilting mechnism of a vehicle seat, in particular for industrial and commercial vehicles**
Rückenlehnenneigungsmechanismus eines Fahrzeugsitzes, insbesondere für Industrie- und Nutzfahrzeuge
Mécanisme d'inclinaison arrière de siège d'un siège de véhicule, en particulier pour véhicules industriels et commerciaux

(43) Date of publication of application: 06.02.2013
(73) Proprietor: IVECO S.p.A., 10156 Torino (IT)
(72) Inventor: Agnusdei, Domenico, 10149 Torino (IT)
(74) Representative: Cinquantini, Bruno

(56) References cited:
- DE-A1- 10 117 534
- DE-A1- 19 837 051
- US-A- 5 873 633

## Description

### APPLICATION FIELD OF THE INVENTION

The present invention refers to a seat back tilting mechanism of a vehicle seat, in particular for industrial and commercial vehicles.

### DESCRIPTION OF THE PRIOR ART

Arranging internal furnishing of industrial or commercial vehicles is particularly complex, because it has to ensure comfort and functionality at the same time.

Some vehicles comprise a tilting system for a portion of a seat back of a vehicle seat.

The seat back generally comprises a middle part and edges shaped for the containment of the torso. Generally the middle part is involved in the tilting movement, while the other perimetral portions are fixed, serving as support frame of the tilting part.

A tilting mechanism is provided so that the middle part of the seat can tilt, such mechanism being formed by two pairs of arms in order to obtain two two-axis hinges, one for each side of the tilting part.

The seat back part tilted in this manner may be used in several ways, thus the corresponding tilting and supporting mechanism has to be particularly robust. Moreover, limit stops have to be provided in order to limit the opening of the tilting part.
A seat back tilting mechanism of a vehicle seat according to the preamble of claim 1 is disclosed in DE-19837051A1.

### SUMMARY OF THE INVENTION

Therefore the aim of the present invention is to provide a particularly robust tilting mechanism. As it will be clear from the following detailed description, such mechanism limits or eliminates the use of limit stops, and thus limits the number of components that are necessary to realize the tilting part of the seat back of a vehicle seat.

It is object of the present invention to provide a vehicular seat back tilting mechanism, in particular for industrial vehicles, in accordance with claim 1.

Another object of the present invention is a vehicle seat comprising the aforementioned tilting mechanism.

It is also object of the present invention an industrial or commercial vehicle comprising an aforementioned vehicle seat provided with the tilting mechanism described above.

The claims are an integral part of the present description.

### BRIEF DESCRIPTION OF THE FIGURES

Further purposes and advantages of the present invention will become clear from the following detailed description of a preferred embodiment (and its alternative embodiments) and the drawings that are attached hereto, which are merely illustrative and non-limitative, in which:
figure 1 shows a schematized lateral view of a vehicle seat comprising a mechanism according to the present invention, with parts in transparency,
figure 2 shows a schematized view of the kinematic mechanism associated to the mechanism of figure 1,

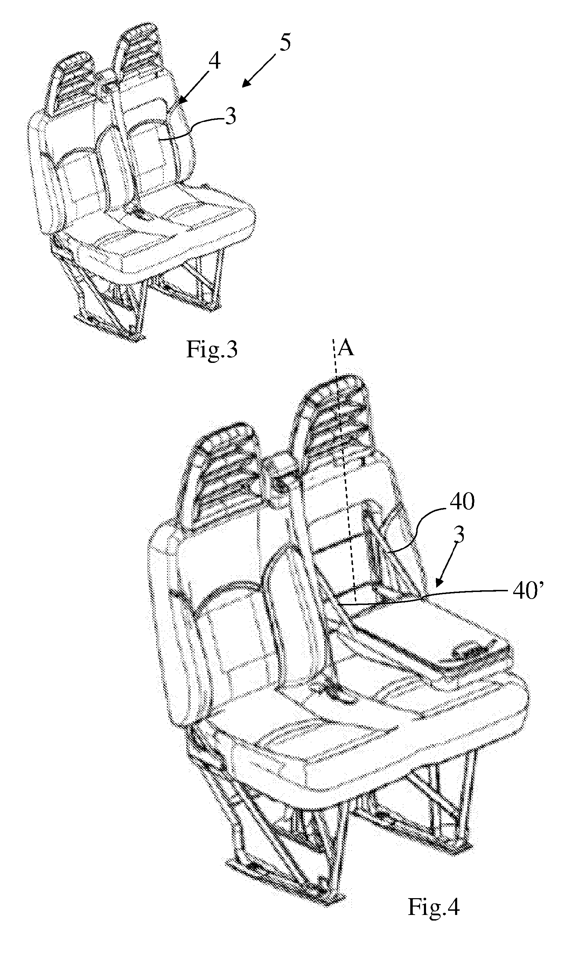

figures 3 and 4 show perspective views of vehicle seats with a forward tilting seat back portion shown in the figures with the seat back portion in vertical position and in tilted position respectively.

In the figures the same reference numbers and letters identify the same elements or components.

### DETAILED DESCRIPTION OF PREFERRED EMBODIMENTS OF THE INVENTION

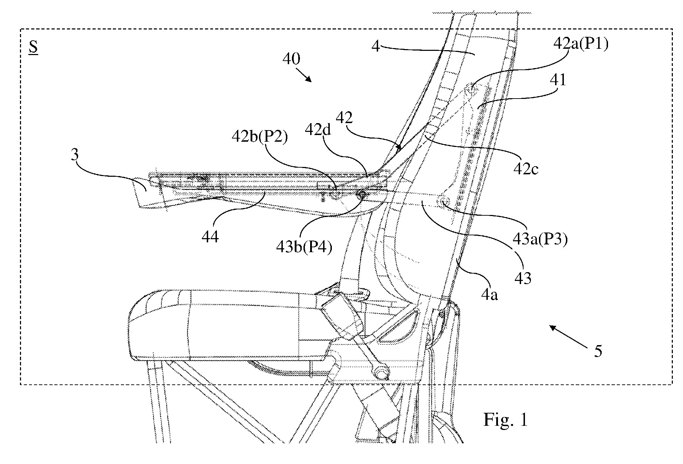

With particular reference to figure 1, the mechanism that is object of the present invention comprises two hinges 40 and 40', each one of them placed at the sides of a portion of the tilting seat back 3, as shown in figure 6. Each hinge, thus, is connected from one side to the seat tilting portion 3 and precisely to a respective frame 44, and from the other side it is connected to the remaining seat back portion 4 of the vehicle seat 5 and precisely to a respective frame 4a.

Hinges 40 and 40' are equal between each other, or they are symmetrical to an axis of symmetry A of the seat back 4 of the vehicle seat 5; thus the description of a hinge is substantially valid also for the other one.

The hinge 40 comprises:
- a bracket 41 suitable to be connected to the remaining part of the seat back 4 of the vehicle seat 5, it is substantially a frame 4a preferably made of metal,
- a frame 44 of the tilting portion 3 of the seat back 4,
- a first arm 42 having a first end 42a hinged in a first point P1 of the bracket 41 and a second end 42b hinged in a first point P2 of the frame 44,
- a second arm 43 having a first end 43a hinged in a second point P3 of the bracket 41 and a second end 43b hinged in a second point P4 of the frame 44.

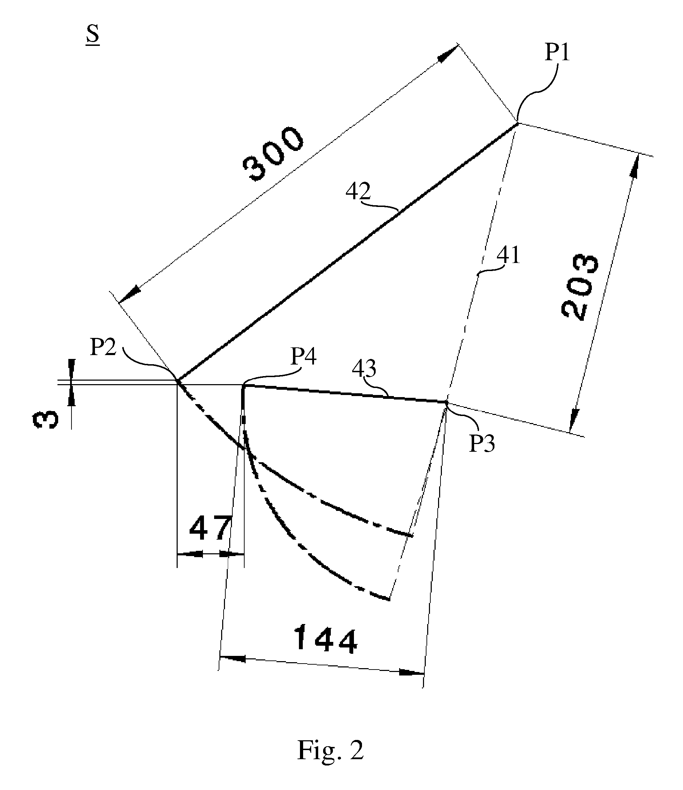

The kinematic mechanism is schematically shown in figure 2, which includes the preferred measures of the mechanism 40. The aforementioned parts are connected so that they define a two-axis hinge in the plane S.

The first arm 42 is longer than the second arm and, when the bracket 41 is associated to the remaining part 4 of the vehicle seat, it is connected to the bracket 41 in a point P1 higher than the point P3 wherein the second arm 43 is hinged.

Preferably the first arm 42 comprises a bend, defining a first straight portion 42c and a second straight portion 41d.

When the portion 3 of the seat back 4 is fully forward tilted, the first arm 42, precisely its second portion 42d, rests on, namely it comes into contact with, at least the second end 43b of the second arm 43.

The mechanism is dimensioned so that the first arm 42 comes into contact with the second arm 43 when the tilting portion 3 of the seat back 4 is fully forward tilted, being substantially horizontal.

Thus limit stops are made unnecessary for keeping the tilting portion 3 in horizontal position.

According to another aspect of the mechanism, parts 41, 42, 43, 44 with the corresponding hinge points P1, P2 ,P3 P4 are positioned so that also the second arm 43 is substantially horizontal when the tilting portion 3 is fully tilted.

The seat 5, shown in the figures and comprising a tilting mechanism 40, may be single or it may be paired with another seat in order to form a seat module of one, two or more seats, of which at least one comprises a tilting portion 3 of seat back 4.

The bend defined by the first arm 42 may be increased or reduced, what counts is that the tilting movement of the portion 3 is stopped because of the interference of the first arm 42 with at least the second end 43b of the second arm 43. By increasing the curve defined by the first arm 42, also the bulk of the arm itself is reduced when the portion 3 of the seat back 4 is fully tilted.

With particular reference to figure 2, the measures are expressed in millimetres according to a preferred embodiment of the invention.

The first arm 42, from the point P1 to the point P2, is 300mm long, the bracket 41, from the point P1 to the point P3, is 200mm long and the second arm 43, from the point P3 to the point P4, is about 140mm long. It can be noted that the distance between the points P2 and P4 on the frame 44 is about 50mm.

The configuration described above allows to stiffen the tilting mechanism, to reduce its components, precisely its limit stops, and to reduce the bulk of the mechanism itself, improving the accessibility of the tilted portion. Above all if a compartment is integrated in such portion.

## Claims

1. Seat back tilting mechanism of a vehicle seat (5), in particular for industrial and commercial vehicles, comprising two hinges (40, 40'), equal and symmetrical between each other, each one of them placed at one side of a seat back (4) in order to allow to tilt at least a tilting portion (3) of the seat back (4) of the vehicle seat (5), each hinge being of the type with two axis of rotation in a respective plane (S) and comprising a bracket (41) intended to be connected to the seat back (4), a first arm (42) suitable to be hinged by a first end (42a) to said bracket (41) and by a second end (42b) to the tilting portion (3) and a second arm (43) suitable to be hinged by a first end (43a) to said bracket (41) and by a second end (43b) to the tilting portion (3), a stop in a fully tilted position of said tilting portion (3) being obtained by means of the interference between the first arm (42) and at least the second end (43b) of the second arm (43), said first end (42a) of the first arm (42) being connected to the bracket (41) in a first point (P1) higher than a third connection point (P3) of the first end (43a) of the second arm to the bracket (41) when said bracket (41) is connected to a seat back (4), the mechanism having a second connection point (P2) of the second end (42b) of the first arm (42) to the tilting portion (3) and a fourth connection point (P4) of the second end (43b) of the second arm (43) ; said second connection point (P2) and said fourth connection point (P4) being aligned horizontally between each other, when the tilting portion (3) is fully tilted,
**characterized in that** said third (P3) and fourth point (P4) are placed so that, when the tilting portion (3) is fully tilted said second arm is substantially horizontal.

2. Mechanism according to claim 1, wherein said first arm (42) comprises a curve defining a first straight portion (42c) and a second straight portion (42d), so that the first portion (42c) rests, when the tilting portion (3) is fully tilted, on said at least second end (43b) of the second arm (43).

3. Vehicle seat (5) comprising a seat back tilting mechanism according to any of the previous claims.

4. Industrial or commercial vehicle comprising a vehicle seat according to the claim 3.

## Patentansprüche

1. Rücklehnenkippmechanismus eines Fahrzeugsitzes (5), insbesondere für industrielle und gewerbliche Fahrzeuge, mit zwei Gelenken (40, 40'), die gleich und symmetrisch zwischen einander sind, wobei jedes derselben auf einer Seite einer Rücklehne (4) platziert ist, um ein Kippen zumindest eines Kippabschnitts (3) der Rücklehne (4) des Fahrzeugsitzes (5) zuzulassen, wobei jedes Gelenk vom Typ mit zwei Rotationsachsen in einer jeweiligen Ebene (S) ist und eine Halterung (41), die zur Verbindung mit der Rücklehne (4) bestimmt ist, einen ersten Arm (42), der dazu geeignet ist, durch ein erstes Ende (42a) an der Halterung (41) und durch ein zweites Ende (42b) an dem Kippabschnitt (3) angelenkt zu werden, und einen zweiten Arm (43), der dazu geeignet ist, durch ein erstes Ende (43a) an der Halterung (41) und durch ein zweites Ende (43b) an dem Kippabschnitt (3) angelenkt zu werden, umfasst, wobei ein Anschlag in einer vollständig gekippten Position des Kippabschnitts (3) mittels der Überlagerung zwischen dem ersten Arm (42) und zumindest dem zweiten Ende (43b) des zweiten Armes (43) erhalten wird, wobei das erste Ende (42a) des ersten Armes (42) mit der Halterung (41) in einem ersten Punkt (P1) verbunden ist, der höher als ein dritter Verbindungspunkt (P3) des ersten Endes (43a) des zweiten Armes zu der Halterung (41) ist, wenn die Halterung (41) mit einer Rücklehne (4) verbunden ist, wobei der Mechanismus einen zweiten Verbindungspunkt (P2) des zweiten Endes (42b) des ersten Armes (42) zu dem Kippabschnitt (3) und einen vierten Verbindungspunkt (P4) des zweiten Endes (43b) des zweiten Armes (43) umfasst; wobei der zweite Verbindungspunkt (P2) und der vierte Verbindungspunkt (P4) zwischen einander horizontal ausgerichtet sind, wenn der Kippabschnitt (3) vollständig gekippt ist, **dadurch gekennzeichnet, dass** der dritte (P3) und vierte Punkt (P4) so angeordnet sind, dass, wenn der Kippabschnitt (3) vollständig gekippt ist, der zweite Arm im Wesentlichen horizontal ist.

2. Mechanismus nach Anspruch 1, wobei der erste Arm (42) eine Kurve umfasst, die einen ersten geraden Abschnitt (42c) und einen zweiten geraden Abschnitt (42d) definiert, so dass der erste Abschnitt (42c) auf dem zumindest zweiten Ende (43b) des zweiten Armes (43) ruht, wenn der Kippabschnitt (3) vollständig gekippt ist.

3. Fahrzeugsitz (5), mit einem Rücklehnenkippmechanismus nach einem der vorhergehenden Ansprüche.

4. Industrielles oder gewerbliches Fahrzeug mit einem Fahrzeugsitz nach Anspruch 3.

## Revendications

1. Mécanisme d'inclinaison de dossier de siège d'un siège de véhicule (5), en particulier pour les véhicules industriels et commerciaux, comprenant deux articulations (40, 40'), égales et symétriques l'une à l'autre, chacune d'elles étant placée d'un côté d'un dossier de siège (4) afin de permettre d'incliner au moins une partie d'inclinaison (3) du dossier de siège (4) du siège de véhicule (5), chaque articulation étant du type doté de deux axes de rotation dans un plan respectif (S) et comprenant un support (41) destiné à être raccordé au dossier de siège (4), un premier bras (42) adapté pour être articulé par une première extrémité (42a) audit support (41) et par une seconde extrémité (42b) à la partie d'inclinaison (3) et un second bras (43) adapté pour être articulé par une première extrémité (43a) audit support (41) et par une seconde extrémité (43b) à la partie d'inclinaison (3), une butée dans une position totalement inclinée de ladite partie d'inclinaison (3) étant obtenue au moyen de l'interférence entre le premier bras (42) et au moins la seconde extrémité (43b) du second bras (43), ladite première extrémité (42a) du premier bras (42) étant raccordée au support (41) en un premier point (P1) plus haut qu'un troisième point de raccordement (P3) de la première extrémité (43a) du second bras au support (41) lorsque ledit support (41) est raccordé à un dossier de siège (4), le mécanisme comportant un deuxième point de raccordement (P2) de la seconde extrémité (42b) du premier bras (42) à la partie d'inclinaison (3) et un quatrième point de raccordement (P4) de la seconde extrémité (43b) du second bras (43) ; ledit deuxième point de raccordement (P2) et ledit quatrième point de raccordement (P4) étant alignés horizontalement l'un par rapport à l'autre, lorsque la partie d'inclinaison (3) est totalement inclinée,
**caractérisé en ce que** lesdits troisième (P3) et quatrième (P4) points sont placés de sorte que, lorsque la partie d'inclinaison (3) est totalement inclinée, ledit second bras soit sensiblement horizontal.

2. Mécanisme selon la revendication 1, dans lequel ledit premier bras (42) comprend une courbe définissant une première partie droite (42c) et une seconde partie droite (42d), de sorte que la première partie (42c) repose, lorsque la partie d'inclinaison (3) est totalement inclinée, sur ladite au moins une seconde extrémité (43b) du second bras (43).

3. Siège de véhicule (5) comprenant un mécanisme d'inclinaison de dossier de siège selon l'une quelconque des revendications précédentes.

4. Véhicule industriel ou commercial comprenant un siège de véhicule selon la revendication 3.
